# EUROPÄISCHE PATENTANMELDUNG

(11) **EP 1 126 691 A2**
(43) Veröffentlichungstag der Anmeldung: **22.08.2001**
(21) Anmeldenummer: 01103775.1
(22) Anmeldetag: 15.02.2001
(51) Int. Cl.: H04M 15/00

(54) **Verfahren zum Bestimmen des Kommunikationsnetzes mit Gebührenhoheit für Verbindungen über Kommunikationsnetze unterschiedlicher Betreiber**

(30) Priorität: 18.02.2000 DE 10007603
(71) Anmelder: SIEMENS AKTIENGESELLSCHAFT, 80333 München (DE)
(72) Erfinder: De Clercq, Pascal, 9120 Drongen (BE); Vackier, Erwin, 8700 Tielt (BE); Van Kets, Johan, 9840 De Pinte (BE)

(57) **Zusammenfassung**

Im einem Signalisierungskanal (ISUP) der Zwischenamtssignalisierung zwischen den Kommunikationsnetzen (KN1..n) wird für eine aktuelle Verbindung (V) zusätzlich eine die Gebührenhoheit des jeweiligen Betreibers anzeigende Betreiberidentifikation (CDPCIC) und eine die Gebührenbestimmung anzeigende Ausführungsinformation (CDDONE) übermittelt. Hierdurch wird in dem betroffenen Kommunikationsnetz (KN) die Gebührenhoheit für die jeweilige Verbindung (V) erkannt und die Gebührenbestimmung durchgeführt sowie die geänderte Ausführungsinformation (CDDONE) mit der Betreiberidentifikation (CDPCIC) weitergeleitet.

## Beschreibung

Mit der Öffnung der Telekommunikationsmärkte entstehen unterschiedliche Kommunikationsnetze, die von unterschiedlichen Betreibern betrieben werden. Unterschiedliche Kommunikationsnetze stellen beispielsweise Festnetze oder Mobilfunknetze dar. Um die Tarife der unterschiedlichen Betreiber dem Teilnehmer zu präsentieren, können die unterschiedlichen Betreiber die Gebühreninformation oder ihre Tarife für die jeweilige Verbindung an das die Gebühren übernehmende Endgerät übermitteln und dort dem Teilnehmer anzeigen. Hierbei ist der jeweilige Betreiber für die Bereitstellung und die Übermittlung der Gebühreninformation zuständig. Dieser zuständige Betreiber bzw. das zuständige Kommunikationsnetz wird in der Fachwelt als Charging Determination Point CDP bezeichnet.

Bei einem Verbindungsaufbau über mehrere Kommunikationsnetze mit unterschiedlichen Betreibern besteht eine Schwierigkeit darin, das für die Bestimmung der Gebühren verantwortliche Kommunikationsnetz zu bestimmen und anschließend zu bestimmen, welche der an der Verbindung beteiligten Vermittlungseinrichtungen in dem betroffenen Kommunikationsnetz die Bestimmung der Gebühren übernimmt. Eine weitere Schwierigkeit zur Bestimmung der Zuständigkeit zur Bestimmung der Gebühren besteht darin, dass die jeweiligen Kommunikationsnetze der unterschiedlichen Betreiber Verbindungen signalisieren und vermitteln, für die sie keine oder eine Bestimmung der Gebühren durchführen müssen. Eine Möglichkeit zur Bestimmung der Gebührenhoheit bzw. der Zuständigkeit für die Bestimmung der Gebühren besteht darin, aufgrund der übermittelten Wählinformation - Ursprungs- und Zielwählinformation- die Gebührenhoheit bzw. die Zuständigkeit zu ermitteln. Dies erfordert jedoch einen zusätzlichen Hard- und Softwareaufwand, der aufgrund besonderer Netzkonfigurationen - z.B. Mehrwertdienste - steigt.

Die der Erfindung zugrundeliegende Aufgabe besteht darin, ein Verfahren zum Bestimmen der Gebührenhoheit bei Verbindungen über mehrere Kommunikationsnetze unterschiedlicher Betreiber mit geringem zusätzlichen Aufwand auszugestalten. Die Erfindung wird ausgehend von einem Verfahren gemäß den Merkmalen des Oberbegriffs des Patentanspruchs 1 durch dessen kennzeichnende Merkmale gelöst.

Der wesentliche Aspekt des erfindungsgemäßen Verfahrens besteht darin, dass im Signalisierungskanal zusätzlich eine die Gebührenhoheit des jeweiligen Betreibers anzeigende Betreiberidentifikation und eine die Gebührenbestimmung anzeigende Ausführungsinformation übermittelt wird. Vorteilhaft werden diese Informationen im Ursprungskommunikationsnetz oder in der Ursprungsvermittlung oder in einem der Kommunikationsnetze der anderen Betreiber gebildet und signalisiert - Anspruch 2.

Ein wesentlicher Vorteil des erfindungsgemäßen Verfahrens ist darin zu sehen, dass vorhandene nationale oder internationale Zwischenamtssignalisierungen mit einer geringfügigen Ergänzung bezüglich eines Einfügens einer Betreiberidentifikation und einer Ausführungsinformation für eine Bestimmung der Gebührenhoheit der Kommunikationsnetze unterschiedlicher Betreiber verwendet werden können. Dies bedeutet einen geringen zusätzlichen Aufwand für die Erweiterung der Zwischenamtssignalisierungen und geringe zusätzliche dynamische Belastungen der Vermittlungseinrichtung der Kommunikationsnetze für die Bestimmung der Gebührenhoheit. Des weiteren wird durch das erfindungsgemäße Verfahren eine Mehrfachbestimmung der Gebühren in den Kommunikationsnetzen eines Betreibers vermieden, da durch das Einfügen einer Ausführungsinformation die bereits erfolgte Ausführung der Bestimmung der Gebühren den weiteren, an der Verbindung beteiligten Vermittlungseinrichtung angezeigt wird.

Gemäß einer weiteren vorteilhaften Ausgestaltung des erfindungsgemäßen Verfahrens wird bei einer aktuellen Auswahl eines Betreibers durch den Teilnehmer oder durch eine durch den Teilnehmer vorgegebene Auswahl in der Ursprungsvermittlung oder im Ursprungskommunikationsnetz eine betreffende Betreiberidentifikation gebildet und signalisiert - Anspruch 4. Die aktuelle Auswahl erfolgt hierbei beispielsweise durch eine geeignete Vorwahl, die den Betreiber angibt, der die Gebührenhoheit erhalten soll. Eine vorgegebene Auswahl kann beispielsweise administrativ durch den Betreiber eingestellt werden, der das Ursprungskommunikationsnetz betreibt.

Eine weitere vorteilhafte Ausgestaltung des erfindungsgemäßen Verfahrens ist darin zu sehen, dass bei keiner Auswahl eines Betreibers durch den Teilnehmer in der Ursprungsvermittlung oder im Ursprungskommunikationsnetz entweder automatisch die Betreiberidentifikation des Betreibers des Ursprungskommunikationsnetzes oder keine Betreiberidentifikation gebildet und signalisiert wird, wobei bei einer fehlenden Benutzeridentifikation durch eines der weiteren Kommunikationsnetze der anderen Betreiber eine Benutzeridentifikation eingefügt werden kann - Anspruch 5. Die eigene Betreiberidentifikation wird eingefügt, wenn das Ursprungskommunikationsnetz für die Bestimmung der Gebühren zuständig ist; ist es nicht zuständig, wird keine Betreiberinformation gebildet und signalisiert.

Vorteilhaft wird in der Ursprungsvermittlung oder im Ursprungskommunikationsnetz eine die Ausführung oder die Nicht-Ausführung der Gebührenbestimmung anzeigende Ausführungsinformation in Abhängigkeit von der Gebührenhoheit des Ursprungskommunikationsnetzes gebildet und signalisiert, und bei einer eine Nicht-Ausführung der Gebührenbestimmung anzeigende Ausführungsinformation wird durch dasjenige in der Verbindung beteiligte Kommunikationsnetz eines anderen Betreibers, das die Gebührenhoheit für die Bestimmung der Gebühren besitzt, nach dem Bestimmen der Gebühren eine die Ausführung der Gebührenbestimmung anzeigende Ausführungsinformation gebildet und signalisiert - Anspruch 6. Durch die Ausführungsinformation wird angezeigt, dass die Gebühren bereits durch eine bzw. eines der vorhergehenden Vermittlungseinrichtungen bzw. Kommunikationsnetze bestimmt worden ist und eine erneute Bestimmung nicht durchgeführt werden darf.

Gemäß einer weiteren vorteilhaften Ausgestaltung des erfindungsgemäßen Verfahrens ist der Signalisierungkanal gemäß der Zwischenamtssignalisierung Nr.7 realisiert und die Betreiberidentifikation und die Ausführungsinformation wird im ISDN User Part signalisiert. Der ISDN User Part ist hierbei nach einem nationalen Standard oder dem internationalen Standard Q.765 realisiert. Hierbei können bereits vorhandene Nachrichtenstrukturen sowie Bildungs- und Verarbeitungsroutinen teilweise weiterverwendet werden.

Im folgenden wird das erfindungsgemäße Verfahren anhand von zwei Figuren näher erläutert. Dabei zeigen
- Fig. 1: ein Ablaufdiagramm für Varianten des erfindungsgemäßen Verfahrens über mehrere Kommunikationsnetze und
- Fig.2: ein weiteres Ablaufdiagramm für Varianten des erfindungsgemäßen Verfahrens innerhalb eines Kommunikaitonsnetzes.

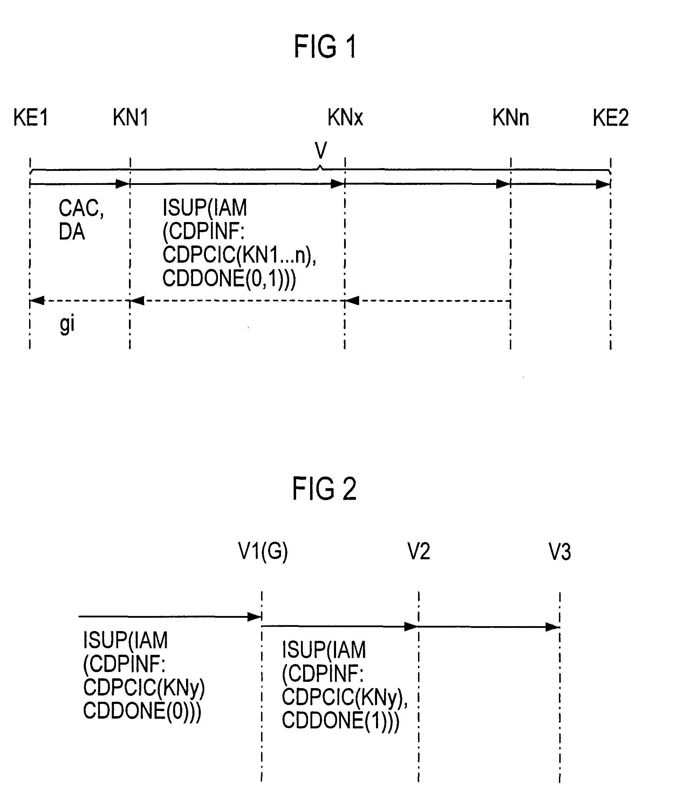

Figur 1 zeigt mehrere Kommunikationsnetze KN1.. n, die jeweils durch strichpunktierte, senkrechte Linien angedeutet sind. Des weiteren sind ein erstes und ein zweites, durch jeweils eine strichpunktierte, senkrechte Linie angedeutete Endgerät KE1,KE2 dargestellt, die beispielhaft eines von mehreren Endgeräten KE des ersten und des n-ten Kommunikationsnetzes KN1, KNn repräsentieren. Hierbei werden die Kommunikationsnetze KN1..n durch unterschiedliche Betreiber betrieben, wobei dasjenige Kommunikationsnetz KN1..n für die Gebührenhoheit, d.h. die Gebührenbestimmung zuständig ist, das aufgrund der gewählten Rufnummer DA und/oder einer angegebenen Netzzugangssinformation CAC im Rahmen des Verbindungsaufbaus für eine Verbindung V zuständig ist - beispielsweise bei einer durch eine in einem Festnetz gewählte Rufnummer DA einschliesslich eines Netzzugangsinformation CAC eines Mobilfunknetzes. Desweiteren stellt für die beispielhafte Verbindung V das erste Kommunikationsnetz KN1 das Ursprungskommunikationsnetz KN1 dar.

Für eine erste Variante des erfindungsgemäßen Verfahrens sei angenommen, dass aufgrund der von dem ersten Endgerät KE1 gewählten Rufnummer DA (Destination Address) und einer Netzzugangsinformation CAC (Carrier Access Code) für eine von dem ersten, an das erste Kommunikationsnetz KN1 angeschlossene Endgerät KE aufgebaute Verbindung V die Gebührenhoheit das erste Kommunikationsnetz KN1 besitzt. Die Gebührenhoheit ist dahingehend zu interpretieren, dass ein Kommunikationsnetz KN mit Gebührenhoheit den Gebührenbestimmungspunkt CDP (Charging Determination Point) darstellt. In diesem Gebührenbestimmungspunkt CDP werden die aktuell anfallenden Gebühren für die Verbindung V ermittelt und eine Gebühreninformationen gi an das den Verbindungsaufbau einleitende Endgerät - im Ausführungsbeispiel das erste Endgerät KE1 - übermittelt. Des weiteren werden die ermittelten Gebühreninformationen gi in dem betroffenen Kommunikationsnetz KN im Sinne einer späteren Gebührenmitteilung an den betroffenen Teilnehmer gespeichert bzw. registriert.

Für diese erste und weitere Varianten des erfindungsgemäßen Verfahrens sei zusätzlich angenommen, dass die erfindungsgemäßen Informationen, d.h. eine Betreiberidentifikation CDPCIC und eine Ausführungsinformation CDDONE im ISUP - bzw. im ISDN- Signalisierungskanal, d.h. im ISDN-User Part ISUP in einer IAM-Meldung (Initial Address Message) - gemäß dem Signalisierungsverfahren Nr. 7 übermittelt werden, wobei die beiden Informationen CDPCIC,CDDONE zusammen die Gebührenbestimmungspunkt-Informationen CDPINF darstellen. Die Betreiberidentifikation CDPCIC gibt an, welches der Kommunikationsnetze KNl..n die Gebührenhoheit besitzt. Bei der ersten Variante ist durch die Übermittlung der Netzzugangsinformation CAC bestimmt, dass das erste Kommunikationsnetz KN1 die Gebührenhoheit besitzt. Zur Information der weiteren Kommunikationsnetze KN2...KNn wird in den ISUP als Gebührenpunktinformation CDPINF eine das erste Kommunikationsnetz KN1 anzeigende Betreiberidentifikation CDPCIC und eine Ausführungsinformation CDDONE eingefügt, die anzeigt, dass im ersten Kommunikationsnetz KN1 die Gebühren bestimmt, registriert und eine entsprechende Gebühreninformation gi an das erste Endgerät KE1 übermittelt wird. Hierzu wird beispielsweise eine binäre "1"-Information als Ausführungsinformation CDDONE angegeben.

Die Betreiberidentifikation CDPCIC sowie die Ausführungsinformation CDDONE werden über die weiteren Kommunikationsnetze KNX..KNn übermittelt und zeigen diesen an, dass sie keine Gebührenhoheit besitzen und keine Gebührenbestimmungen durchführen dürfen.

Bei einer zweiten Variante des erfindungsgemäßen Verfahrens wird angenommen, dass eines der an der Verbindung V beteiligten Kommunikationsnetze KNx die Gebührenhoheit besitzt, wobei vom ersten Endgerät KE1 eine Netzzugangssinformation CAC angegeben ist, die als die Gebührenhoheit besitzendes Kommunikationsnetz KN das x-te Kommunikationsnetz bestimmt. Hierbei wird im ersten Kommunikationsnetz KN1 als Betreiberidentifikation CDPCIC eine das x-te Kommunikationsnetz KNx anzeigende Information und als Ausführungsinformation CDDONE eine Information - beispielsweise eine binäre "0"-Information eingefügt, die anzeigt, dass noch keine Gebührenbestimmung durchgeführt ist. In jeder der weiteren Kommunikationsetze KN2.. wird die Betreiberidentifikation CDPCIC und die Ausführungsinformation CDDONE dahingehend überprüft, ob die Betreiberidentifikation CDPCIC mit der Identifikation des jeweiligen Kommunikationsnetzes KN2.. übereinstimmt. Gemäß der zweiten Variante wird im x-ten Kommunikationsnetz KNx festgestellt, dass aufgrund der Betreiberidentifikation CDPCIC das x-te Kommunikationsnetz KNx die Gebührenhoheit bzw. den Gebührenbestimmungspunkt CDP besitzt und dieses Kommunikationsnetz KNx die Gebührenbestimmung durchführen muß. Durch das x-te Kommunikationsnetz KNx wird die Ausführungsinformation CDDONE von der binären "0"-Information in die binäre "1"-Information geändert, wodurch den nachfolgenden Kommunikationsnetzen KNx+1.. KNm angezeigt wird, dass die Gebührenbestimmung durch diese nicht mehr durchgeführt werden darf.

Gemäß einer dritten Variante des erfindungsgemäßen Verfahrens wird vom ersten Endgerät KE1 keine Netzzugangssinformation CAC, sondern lediglich eine Rufnummer DA angegeben. Im ersten Kommunikationsnetz KN1 wird die ankommende Rufnummer DA überprüft, ob sie für diese Rufnummer DA die Gebührenhoheit bzw. den Gebührenbestimmungspunkt CDP besitzt. Besitzt das erste Kommunikationsnetz KN1 die Gebührenhoheit, so wird in diesem eine das erste Kommunikationsnetz KN1 als den Gebührenbestimmungspunkt CDP angebende Betreiberidentifikation CDPCIC gebildet. Zusätzlich wird als Ausführungsinformation CDDONE eine binäre "1"-Information gebildet und zusammen mit der Betreiberidentifikation CDPCIC als Gebührenbestimmungspunk-Information CDPINF an die weiteren Kommunikationsnetze KN2.. übermittelt. Diesen Kommunikationsnetzen KN2.. wird hierdurch angezeigt, dass das erste Kommunikationsnetz KN1 die Gebührenhoheit besitzt und sie keine Gebührenbestimmung mehr durchführen dürfen, auch wenn eines der weiteren Kommunikationsnetze KN2.. ein Teil des ersten Kommunikationsnetzes KN1 ist.

Wird gemäß der dritten Variante im ersten Kommunikationsnetz KN1 festgestellt, daß es nicht die Gebührenhoheit für die Rufnummer DA besitzt, so wird eine Betreiberidentifikation CDPCIC gebildet, die kein Kommunikationsnetz KN mit Gebührenhoheit anzeigt - beispielsweise wird keine Betreiberidentifikation CDPCIC oder eine "0"-Information als Gebührenbestimmungspunk-Information CDPINF gebildet. Die Ausführungsinformation CDDONE ist hierbei als eine binäre "0"-Information angegeben. Hierdurch ist den weiteren Kommunikationsnetzen KN2.. angezeigt, dass die Rufnummer DA zur Bestimmung des Kommunikationsnetzes KN mit Gebührenhoheit zu überprüfen ist und die Gebührenbestimmung nicht durchgeführt ist. Wird beispielsweise durch die Rufnummernüberprüfung im x-ten Kommunikationsnetz KNx festgestellt, dass dieses die Gebührenhoheit besitzt, so wird in diesem die Gebührenbestimmung durchgeführt, die Gebühren registriert und eine Gebühreninformation gi an das erste Endgerät für eine Gebührenanzeige übermittelt. Desweiteren wird eine Betreiberidentifikation CDPCIC gebildet, die anzeigt, dass das x-te Kommunikationsnetz KNx die Gebührenhoheit besitzt. Zusätzlich wird die binäre "0"-Information der Ausführungsinformation CDDONE in eine binäre "1"-Information geändert und zusammen mit der Betreiberidentifikation CDPCIC als Gebührenbestimmungspunk-Information CDPINF an die weiteren Kommunikationsnetze KNx+1..n übermittelt. Diesen wird hierdurch angezeigt, dass das x-te Kommunikationsnetz KNx die Gebührenhoheit besitzt und die Gebühren nicht bestimmt werden dürfen. Bei dieser vierten Variante kann das x-te Kommunikationsnetz KNx beispielsweise eine Kommunikationsnetz KN sein, das einen bestimmten Dienst bzw. einen bestimmten Service bereitstellt - beispielsweise ein Service Provider.

Fig.2 zeigt bespielhaft drei Vermittlungseinrichtungen V1.. 3, durch die ein in Fig.1 angebenes Kommunikationsnetz Kny gebildet ist. Es können auch zwei oder mehrere Vermittlungseinrichtungen V in dem jeweiligen Kommunikationsnetz KN angeordnet sein. Repräsentiert das Kommunikationsnetz KNy das erste Kommunikationsnetz KN1, so stellt die erste Vermittlungseinrichtung V1 die Ursprungsvermittlungseinrichtung V1 für die beispielhaft beschriebene Verbindung V dar. Für das Ausführungsbeispiel sei angenommen, dass dieses Kommunikationsnetz KNy die Gebührenhoheit besitzt, d.h. die Gebührenbestimmung durchgeführt wird. Durch administrative Einstellungen in diesem Kommunikationsnetz KNy kann bestimmt werden, welche der Vermittlungseinrichtungen V1..3 die Gebührenbestimmung durchführt. Diese Vermittlungseinrichtung V1..3 stellt den Gateway G für die ankommende Gebührenbestimmungspunk-Information CDPINF dar. Im Ausführungsbeispiel repräsentiert die erste Vermittungseinrichtung V1 den Gateway G. Dies bedeutet, dass nach der Überprüfung der übermittelten Gebührenbestimmungspunk-Information CDPINF, d.h. der Betreiberidentifikation CDPCIC und der Ausführungsinformation CDDONE festgestellt wird, dass das der erste Vermittlungseinrichtung V1 zugeordnete Kommunikationsnetz Kny die Gebührenhoheit besitzt und sie ein Gateway G ist. In der ersten Vermittlungseinrichtung V1 wird daraufhin die Gebührenbestimmung durchgeführt und die Ausführungsinformation CDDONE von der binären "0"-Information in eine binäre "1"-Information geändert. Durch diese Änderung wird den nachfolgenden Vermittlungseinrichtungen V2,3 angezeigt, dass sie keine Bestimmung der Gebühren durchführen dürfen. Stellt die zweite Vermittlungseinrichtung V2 den Gateway dar, so wird die Gebührenbestimmungspunk-Information CDPINF nach einer Überprüfung unverändert an die zweite Vermittlungseinrichtung V2 übermittelt. Nach einer Überprüfung in der zweiten Vermittlungseinrichtung V2 werden dort die Gebühren bestimmt und die Gebührenbestimmungspunk-Information CDPINF entsprechend modifiziert.

Das erfindungsgemäße Verfahren ist nicht auf das Ausführungsbeispiel beschränkt und kann für unterschiedlichste Kommunikationsnetze KN wie beispielsweise Zubringer- Kommunikationsnetze oder Verbindungs- Kommunikationsnetze wie beispielsweise öffentliche Kommunikationsnetze oder Funk- Kommunikationsnetze oder Satelliten- Kommunikationsnetze oder zellulare Kommunikationsnetze mit unterschiedlichsten Betreibern eingesetzt werden, wobei die Kommunikationsnetze KN in Teil- Kommunikationsnetze unterteilt und dazwischen Kommunikationsnetze KN anderer Betreiber eingefügt sein können. Hierbei ist lediglich die entsprechende Gebührenbestimmungspunk-Information CDPINF in die jeweilige Signalisierungsinformation einzufügen.

## Patentansprüche

1. Verfahren zum Bestimmen des Kommunikationsnetzes (KN) mit Gebührenhoheit für Verbindungen (V), die über Kommunikationsnetze (KN1..n) unterschiedlicher Betreiber vermittelt werden,
**dadurch gekennzeichnet,**
dass im Signalisierungskanal (ISUP) zusätzlich eine die Gebührenhoheit des jeweiligen Betreibers anzeigende Betreiberidentifikation (CDPCIC) und eine die Gebührenbestimmung anzeigende Ausführungsinformation (CDDONE) übermittelt wird.

2. Verfahren nach Anspruch 1, **dadurch gekennzeichnet**, dass die Betreiberidentifikation (CDPCIC) und die Ausführungsinformation (CDDONE) im Ursprungskommunikationsnetz (KN1) oder in der Ursprungsvermittlung (V1) oder in einem der Kommunikationsnetze (KN1..n) der anderen Betreiber gebildet wird.

3. Verfahren nach einem der Ansprüche 1 oder 2, **dadurch gekennzeichnet**, dass bei einer aktuellen Auswahl eines Betreibers durch den Teilnehmer oder durch eine durch den Teilnehmer vorgegebene Auswahl in der Ursprungsvermittlung (V1) oder im Ursprungskommunikationsnetz (KN1) eine betreffende Betreiberidentifikation (CDPCIC) gebildet und signalisiert wird.

4. Verfahren nach einem der Ansprüche 1 oder 2, **dadurch gekennzeichnet**, dass bei keiner Auswahl eines Betreibers durch den Teilnehmer in der Ursprungsvermittlung (V1) oder im Ursprungskommunikationsnetz (KN1)
- entweder automatisch die Betreiberidentifikation (CDPCIC) des Betreibers des Ursprungskommunikationsnetzes (KN1)
- oder keine Betreiberidentifikation (CDPCIC) gebildet und signalisiert wird, wobei bei einer fehlenden Benutzeridentifikation (CDPCIC) durch eines der weiteren Kommunikationsnetze (KN2..n) der anderen Betreiber eine Benutzeridentifikation (CDPCIC) eingefügt werden kann.

5. Verfahren nach einem der vorhergenden Ansprüche, **dadurch gekennzeichnet**,
- dass in der Ursprungsvermittlung (V1) oder im Ursprungskommunikationsnetz (KN1) eine die Ausführung oder die Nicht-Ausführung der Gebührenbestimmung anzeigende Ausführungsinformation (CDDONE) in Abhängigkeit von der Gebührenhoheit des Ursprungskommunikationsnetzes (KN1) gebildet und signalsiert wird, und
- dass bei einer eine Nicht-Ausführung der Gebührenbestimmung anzeigende Ausführungsinformation (CDDONE) durch dasjenige in der Verbindung beteiligte Kommunikationsnetz (KN1..n) eines anderen Betreibers, das die Gebührenhoheit für die Bestimmung der Gebühren besitzt, nach dem Bestimmen der Gebühren eine Ausführung der Gebühren anzeigende Ausführungsinformation (CDDONE) gebildet und signalisiert wird,
- dass bei einer signalisierten, eine Ausführung der Bestimmung der Gebühren anzeigende Ausführunginformation (CDDONE) durch die weiteren Kommunikationsnetze (KN) keine Bestimmung der Gebühren durchgeführt werden darf.

6. Verfahren nach einem der vorhergenden Ansprüche, **dadurch gekennzeichnet**,
dass die Bestimmung der Gebühren
- die Bestimmung des Tarifs,
- die Bildung und Signalisierung einer Gebühreninformation (gi) an eines der vorhergehenden Kommunikationsnetze (KN) der Betreiber
umfaßt.

7. Verfahren nach einem der vorhergenden Ansprüche, **dadurch gekennzeichnet**, dass der Signalisierungkanal gemäß der Zwischenamtssignalisierung Nr.7 realisiert ist und die Betreiberidentifikation (CDPCIC) und die Ausführungsinformation (CDDONE) in einer IAM-Meldung des ISDN User Parts (ISUP) signalisiert wird.

8. Verfahren nach Anspruch 7, **dadurch gekennzeichnet**, das der ISDN User Part (ISUP) nach einem nationalen Standard oder dem internationalen Standard Q.765 realisiert ist.

9. Verfahren nach einem der vorhergehenden Ansprüche, **dadurch gekennzeichnet**,
dass die Betreiberidentifikation (CDPCIC) durch eine Information repräsentiert ist, durch die das dem jeweiligen Betreiber zugeordnete Kommunikationsnetz (KNl..n) mit der Gebührenhoheit bestimmt ist.
